# EUROPEAN PATENT SPECIFICATION

(11) **EP 2 357 161 B1**
(45) Date of publication and mention of the grant of the patent: **28.01.2015**
(21) Application number: 10829470.3
(22) Date of filing: 15.07.2010
(51) Int. Cl.: C04B 7/04, C04B 7/32

(54) **METHOD FOR SECONDARILY SYNTHESIZING CALCIUM SULPHOALUMINATE MINERAL IN PORTLAND CEMENT CLINKER**
VERFAHREN ZUR SEKUNDÄREN SYNTHETISIERUNG EINES CALCIUM-SULFOALUMINAT-MATERIALS IN EINEM PORTLANDZEMENTKLINKER
PROCÉDÉ DE SYNTHÉTISATION SECONDAIRE DE MINÉRAL DE SULFOALUMINATE DE CALCIUM DANS UN CLINKER DE CIMENT PORTLAND

(30) Priority: 13.11.2009 CN 200910212645
(43) Date of publication of application: 17.08.2011
(73) Proprietor: Nanjing University Of Technology, Jiangsu 210009 (CN)
(72) Inventor: SHEN, Xiaodong, Nanjing Jiangsu 210009 (CN); MA, Suhua, Nanjing Jiangsu 210009 (CN); DENG, Song, Nanjing Jiangsu 210009 (CN); CHEN, Lin, Nanjing Jiangsu 210009 (CN); LI, Xuerun, Nanjing Jiangsu 210009 (CN); ZHOU, Weiqiang, Nanjing Jiangsu 210009 (CN)
(74) Representative: Von Rohr Patentanwälte Partnerschaft mbB
(86) International application number: PCT/CN2010/075188
(87) International publication number: WO 2011/057506

(56) References cited:
- EP-A1- 0 812 811
- EP-A1- 0 812 811
- CN-A- 1 490 270
- CN-A- 1 490 270
- CN-A- 101 134 647
- CN-A- 101 134 647
- CN-A- 101 717 209
- DE-C1- 4 204 227
- US-A- 5 698 027
- GLASSER F P ET AL: "High-performance cement matrices based on calcium sulfoaluminate-belite compositions", CEMENT AND CONCRETE RESEARCH, PERGAMON PRESS, ELMSFORD, NY, US, vol. 31, no. 12, 1 December 2001 (2001-12-01), pages 1881-1886, XP002320779, ISSN: 0008-8846, DOI: 10.1016/S0008-8846(01)00649-4

## Description

### Field of the invention

The present invention relates to the preparation process of high gelling cement clinker, more specifically, it relates to secondary synthetic method of calcium sulphoaluminate mineral in Portland cement clinker.

### Background of the invention

C₄A₃S̅ mineral in Portland cement improves initial strength of cement, stimulates activity of composite material, and increases utilization rate of composite material in Portland cement, thus the formation of C₄A₃ S̅ mineral in Portland cement clinker has significant importance.

The key issue in the preparation of Portland cement clinker containing C₄A₃S̅ mineral is the problem of coexistence of C₄A₃S̅ and Alite, wherein C₄A₃S̅ mineral decomposes largely at 1350°C, while the formation of Alite in clinker starts at 1450°C, therefore, from thermodynamics point of view, C₄A₃S̅ and Alite can not coexist in one same system. At present, Portland cement clinker containing C₄A₃S̅ mineral is mainly prepared by doping fluorite and plaster to Portland cement raw meal which then is calcined at 1300∼1400 °C.

However, at present, most of cement is prepared via novel dry calcination in China, wherein the calcination temperature is around 1450°C and most of the formed C₄A₃S̅ in cement clinker has been decomposed, therefore, only a small amount of C₄A₃S̅ is left in cement clinker, leading to the deficiency of certain properties (such as initial strength) of Portland cement containing C₄A₃S̅ mineral. Therefore, method for preparation of Portland cement clinker containing C₄A₃S̅ has not been industrialized in China, and most of cement enterprises still produce traditional Portland cement clinker in pre-calcining kiln.

### Summary of the invention

The object of the present invention is to improve the present calcining process of Portland cement clinker containing C₄A₃S̅ mineral, and to provide a secondary synthetic method for preparation of calcium sulphoaluminate mineral in Portland cement clinker. As a result, the initial strength of said cement is improved and the requirements for production of Portland cement clinker containing C₄A₃S̅ mineral in large pre-calcining kiln can be met.

To realize above mentioned object, the technical scheme of present invention is a secondary synthetic method for calcium sulphoaluminate mineral in Portland cement clinker, wherein it consists of the following steps:
(1) Plaster is doped to Portland cement raw meal so that the content of SO₃ in the raw meal is 0.5~6.0 wt%;
(2) The prepared raw meal is calcined, the temperature is increased to 1400~1600°C at a rate of 1~25°C per minute and kept at said temperature, then it is naturally cooled;
(3) The cooled clinker is heated to 800∼1300°C at a rate of 1~25°C per minute, and kept at said temperature, then it is naturally cooled;
(4) Said cooled clinker is ground to powder with the aid of ball mill;

Or it consists of the following steps:
(1A) plaster is added to Portland cement raw meal so that the content of SO₃ in the raw meal is 0.5~6.0 wt%;
(2A) The prepared raw meal is calcined; the temperature is increased to 1400~1600°C at a rate of 1~25°C per minute and kept at said temperature, then it is transferred to a cooler, the temperature is reduced at a rate of 40~80°C per minute;
(3A) Keep the temperature when it is cooled to 800~1300°C, and then it is naturally cooled;
(4A) The said cooled cement clinker is ground to powder with the aid of ball mill.

Preferably, the holding time of step (2), (3), (2A) and (3A) is 5~120 min, respectively. Preferably, the specific surface area of ground powder of step (4) and (4A) is 340 360m²/kg.

Calcination of of the prepared raw meal in step (2) and (2A) is carried out under regular processing parameters.

### Beneficial effects of the present invention:

The present invention relates to the thermal treatment of Portland cement clinker containing calcium sulphoaluminate mineral, through which calcium sulphoaluminate mineral which has been decomposed at high temperature is reformed, thus the content of calcium sulphoaluminate mineral in cement clinker is improved, the function of calcium sulphoaluminate mineral in Portland cement clinker is brought into full play, the short-term and long-term properties of cement clinker are improved and the doping amount of composite material in cement is increased.

### Examples

The present invention is further illustrated with reference to the following examples, but the present invention is not limited to the following examples.

### Example 1:

0.30kg plaster (the SO₃ content in plaster is 32.90 wt%) was doped to 5kg prepared Portland cement raw meal (the chemical compositions of cement raw meal are shown in Table 1), as a result, the SO₃ content in raw meal is 1.86 wt%;
(1) The prepared cement raw meal was heated to 1480°C, calcined for 30min and cooled; subsequently, the temperature was increased to 1450°C at a rate of 5°C per minute and kept at said temperature for 30min, and then it was cooled;
(2) The cooled cement clinker was increased at a rate of 10°C per minute until it reached 1200°C, and kept at said temperature for 60min, and then it was cooled;
(3) The said cooled cement clinker was ground to powder with the aid of ball mill, the specific surface area of said powder is 350m²/kg; according to the test method of present inventor disclosed in CN200710302594.1, it was determined that the C₄A₃S̅ content of cement clinker produced by Xuzhou Huaihai Cement Factory (without thermal treatment) was 0.5 wt%, and the C₄A₃S̅ content of cement clinker of present Example (after thermal treatment) was 4.8 wt%;
(4) 4g plaster was added to 96g final obtained cement clinker, the said mixture was mixed uniformly, subsequently, 29mL water (ratio between water and cement w/c = 0.29) was added, the said mixture was stirred and molded to 20x20x20mm samples, and the 1d, 3d and 28d compressive strength was determined. Samples were first cured in a curing case for 24h, wherein the relative humidity was 90% and the temperature was 20±2°C, and then the demolded sample was cured in a water curing case at 20±1°C. The comparison of resulting strength is shown in Table 2.

**Table 1 Chemical composition of raw meal**

| Loss | CaO | SiO₂ | Al₂O₃ | Fe₂O₃ | MgO |
|---|---|---|---|---|---|
| 34.02 | 43.94 | 14.28 | 2.42 | 2.26 | 1.19 |

**Table 2 Paste strength of Portland cement containing calcium sulphoaluminate mineral(MPa)**

| Examples | 1d | 3d | 28d |
|---|---|---|---|
| Xuzhou Huaihai Cement Factory (Portland cement clinker containing calcium sulphoaluminate mineral) | 43.4 | 57.6 | 86.4 |
| Example 1 | 55.7 | 66.9 | 94.2 |

### Example 2:

(1) 0.28kg plaster (the SO₃ content of plaster is 32.90 wt%) was added to 5kg prepared Portland cement raw meal (the chemical compositions of cement raw meal are shown in Table 1), as a result, the SO₃ content of raw meal was 1.74 wt%;
(2) The prepared cement raw meal was heated to 1450°C, calcined for 60min and cooled; subsequently, the temperature was increased to 1400°C at a rate of 10°C per minute and kept at said temperature for 50min, and then it was cooled;
(3) The cooled cement clinker was increased at a rate of 15°C per minute until it reached 1250°C, and kept at said temperature for 90min, and then it was cooled;
(4) The said cooled cement clinker was ground to powder with the aid of ball mill, the specific surface area of said powder is 360m²/kg;
(5) 4g plaster was added to 96g final obtained cement clinker, the said mixture was mixed uniformly, subsequently, 29mL water (ratio between water and cement w/c = 0.29) was added, the said mixture was stirred and molded to 20x20x20mm samples, and the 1d, 3d and 28d compressive strength was determined. Samples were first cured in a curing case for 24h, wherein the relative humidity was 90% and the temperature was 20±2°C, and then the demolded sample was cured in a water curing case at 20±1 °C. The comparison of resulting strength is shown in Table 3.

**Table 3 Paste strength of Portland cement containing calcium sulphoaluminate mineral (MPa)**

| Examples | 1d | 3d | 28d |
|---|---|---|---|
| Xuzhou Huaihai Cement Factory (Portland cement clinker containing calcium sulphoaluminate mineral) | 43.4 | 57.6 | 86.4 |
| Example 2 | 54.5 | 67.0 | 93.8 |

### Example 3:

(1) 0.3kg plaster (the SO₃ content of plaster is 32.90 wt%) was added to 5kg Portland cement raw meal (the chemical compositions of cement raw meal are shown in Table 1), as a result, the SO₃ content of raw meal was 1.86 wt%;
(2) The prepared cement raw meal was heated to 1450°C, calcined for 60min and cooled; subsequently, the temperature was increased to 1450°C at a rate of 5°C per minute and kept at said temperature for 30min, and then it was transferred to a cooler, the temperature was reduced at a rate of 55°C per min;
(3) The temperature was cooled to 1250°C, and kept at said temperature for 60min, and then it was cooled again;
(4) The said cooled cement clinker was ground to powder with the aid of ball mill, the specific surface area of said powder is 340m²/kg;
(5) 4g plaster was added to 96g final obtained cement clinker, the said mixture was mixed uniformly, subsequently, 29mL water (ratio between water and cement w/c = 0.29) was added, the said mixture was stirred and molded to 20x20x20mm samples, and the 1d, 3d and 28d compressive strength was determined. Samples were first cured in a curing case for 24h, wherein the relative humidity was 90% and the temperature was 20±2°C, and then the demolded sample was cured in a water curing case at 20±1 °C. The comparison of resulting strength is shown in Table 4.

**Table 4 Paste strength of Portland cement containing calcium sulphoaluminate mineral(MPa)**

| Examples | 1d | 3d | 28d |
|---|---|---|---|
| Xuzhou Huaihai Cement Factory (Portland cement clinker containing calcium sulphoaluminate mineral) | 43.4 | 57.6 | 86.4 |
| Example 3 | 47.2 | 64.2 | 91.5 |

### Example 4:

(1) 0.28kg plaster (the SO₃ content of plaster is 32.90 wt%) was added to 5kg Portland cement raw meal (the chemical compositions of cement raw meal are shown in Table 1), as a result, the SO₃ content of raw meal was 1.74 wt%;
(2) The prepared cement raw meal was heated to 1450°C, calcined for 60min and cooled; subsequently, the temperature was increased to 1400°C at a rate of 10°C per minute and kept at said temperature for 50min, and then it was transferred to a cooler, the temperature was reduced at a rate of 50°C per min;
(3) The temperature was cooled to 1200°C and kept at said temperature for 30min, and then it was cooled;
(4) The said cooled cement clinker was ground to powder with the aid of ball mill, the specific surface area of said powder is 340~360m²/kg;
(5) 4g plaster was added to 96g final obtained cement clinker, the said mixture was mixed uniformly, subsequently, 29mL water (ratio between water and cement w/c = 0.29) was added, the said mixture was stirred and molded to 20x20x20mm samples, and the 1d, 3d and 28d compressive strength was determined. Samples were first cured in a curing case for 24h, wherein the relative humidity was 90% and the temperature was 20±2°C, and then the demolded sample was cured in a water curing case at 20±1°C. The comparison of resulting strength is shown in Table 5.

**Table 5 Paste strength of Portland cement containing calcium sulphoaluminate mineral (MPa)**

| Examples | 1d | 3d | 28d |
|---|---|---|---|
| Xuzhou Huaihai Cement Factory (Portland cement clinker containing calcium sulphoaluminate) | 43.4 | 57.6 | 86.4 |
| Example 4 | 45.2 | 65.8 | 92.0 |

## Claims

1. A secondary synthetic method for calcium sulphoaluminate mineral in Portland cement clinker, wherein it consists of the following steps:
(1) Plaster is added to Portland cement raw meal so that the SO₃ content of raw meal is 0.5 - 6.0 wt.-%;
(2) the prepared raw meal is calcinated, the temperature is increased to 1400 - 1600 °C at a rate of 1 - 25°C per minute and is kept at said temperature, and then it is naturally cooled;
(3) the cooled clinker is heated to 800 -1300 °C at a rate of 1 - 25°C per minute, and kept at said temperature, and then it is naturally cooled;
(4) said cooled clinker is ground to powder with the aid of ball mill;
or it consists of the following steps:
(1A) plaster is added to Portland cement raw meal so that the SO₃ content of raw meal is 0.5 - 6.0 wt.-%;
(2A) said prepared raw meal is calcinated, the temperature is increased to 1400 - 1600 °C at a rate of 1 - 25 °C per minute, and kept at said temperature, and then it is transferred to a cooler, the temperature is cooled at a rate of 40 - 80°C per minute;
(3A) keep the temperature when it is cooled to 800 - 1300 °C, and then it is naturally cooled;
(4A) the said cooled cement clinker is ground to powder with the aid of ball mill.

2. The method according to Claim 1, wherein the holding time of step (2), (3), (2A) and (3A) is 5 - 120 minutes, respectively.

3. The method according to Claim 1, wherein the specific surface area of powder ground by ball mill in step (4) and (4A) is 340 - 60 m²/kg.

## Patentansprüche

1. Sekundäres Syntheseverfahren für Calciumaluminiumsulfat-Mineral in Portlandzementklinker, welches aus den folgenden Schritten besteht:
(1) dem Portlandzement-Rohmehl wird Mörtel derart zugefügt, dass der SO₃-Gehalt des Rohmehls 0,5 bis 6 Gew.-% beträgt;
(2) das vorbereitete Rohmehl wird kalziniert, die Temperatur wird mit einer Rate von 1 - 25 °C pro Minute auf 1.400 - 1.600 °C erhöht und bei der vorgenannten Temperatur gehalten, und dann wird es natürlich abgekühlt;
(3) der abgekühlte Klinker wird mit einer Rate von 1 - 25 °C pro Minute auf 800 - 1.300 °C erhitzt und bei dieser Temperatur gehalten, und dann natürlich abgekühlt;
(4) der abgekühlte Klinker wird mit Hilfe einer Kugelmühle zu Pulver vermahlen;
oder aus den folgenden Schritten besteht:
(1A) dem Portlandzement-Rohmehl wird derart Mörtel zugefügt, dass der SO₃-Gehalt des Rohmehls 0,5 bis 6,0 Gew.-% beträgt;
(2A) das vorbereitete Rohmehl wird kalziniert, die Temperatur wird mit einer Rate von 1 - 25 °C pro Minute auf 1.400 - 1.600 °C erhöht, und (das vorbereitete Rohmehl) wird bei dieser Temperatur gehalten und anschließend in einen Kühler überführt, die Temperatur wird mit einer Rate von 40 - 80 °C pro Minute abgekühlt;
(3A) der abgekühlte Zementklinker wird mittels einer Kugelmühle zu Pulver vermahlen.

2. Verfahren nach Anspruch 1, wobei die Standzeit der Schritte (2), (3), (2A) und (3A) 5 - 120 Minuten beträgt.

3. Verfahren nach Anspruch 1, wobei die spezifische Oberfläche des mittels Kugelmühle gemahlenen Pulvers in Schritt (4) und (4A) 340 - 60 m²/kg beträgt.

## Revendications

1. Procédé de synthétisation secondaire de minéral de sulfoaluminate de calcium dans un clinker de ciment Portland, étant constitué des étapes suivantes :
(1) du plâtre est ajouté à une farine crue de ciment Portland de manière à ce que la teneur en SO₃ de la farine crue soit de 0,5 à 6,0 % en poids ;
(2) la farine crue préparée est calcinée, la température est augmentée à 1 400 - 1 600 °C à une vitesse de 1 à 25 °C par minute et elle est maintenue à ladite température, puis elle est refroidie naturellement ;
(3) le clinker refroidi est chauffé à 800 - 1 300 °C à une vitesse de 1 à 25 °C par minute, et maintenu à ladite température, puis il est refroidi naturellement ;
(4) ledit clinker refroidi est broyé sous forme de poudre à l'aide d'un broyeur à boulets ;
ou étant constitué des étapes suivantes :
(1A) du plâtre est ajouté à une farine crue de ciment Portland de manière à ce que la teneur en SO₃ de la farine crue soit de 0,5 à 6,0 % en poids ;
(2A) ladite farine crue préparée est calcinée, la température est augmentée à 1 400 - 1 600 °C à une vitesse de 1 à 25 °C par minute, et elle est maintenue à ladite température, puis elle est transférée dans un refroidisseur, la température est refroidie à une vitesse de 40 à 80 °C par minute ;
(3A) elle est maintenue à une température de refroidissement de 800 à 1 300 °C, puis elle est refroidie naturellement ;
(4A) ledit clinker de ciment refroidi est broyé sous forme de poudre à l'aide d'un broyeur à boulets.

2. Procédé selon la Revendication 1, dans lequel le temps de maintien de l'étape (2), (3), (2A) et (3A) est de 5 à 120 minutes, respectivement.

3. Procédé selon la Revendication 1, dans lequel la surface spécifique de la poudre broyée par le broyeur à boulets dans l'étape (4) et (4A) est de 340 à 60 m²/kg.
